# EUROPEAN PATENT SPECIFICATION

(11) **EP 2 617 759 B1**
(45) Date of publication and mention of the grant of the patent: **03.12.2014**
(21) Application number: 13151920.9
(22) Date of filing: 18.01.2013
(51) Int. Cl.: C08J 7/04, C09D 189/00, C09J 189/00

(54) **METHOD OF MODIFYING THE PROPERTIES OF A SURFACE**
VERFAHREN ZUR MODIFIZIERUNG DER EIGENSCHAFTEN EINER OBERFLÄCHE
PROCÉDÉ DE MODIFICATION DES PROPRIÉTÉS D'UNE SURFACE

(30) Priority: 19.01.2012 SE 1250027
(43) Date of publication of application: 24.07.2013
(73) Proprietor: Acreo Swedish ICT AB, 164 40 Kista (SE)
(72) Inventor: Ilver, Dag, SE-428 34 KÅLLERED (SE); Krozer, Anatol, SE-413 17 GÖTEBORG (SE)
(74) Representative: Haag, Malina Anna

(56) References cited:
- WO-A1-03/051418
- WO-A1-03/080137
- WO-A1-2004/005421
- WO-A1-2006/038866
- WO-A1-2010/091298

## Description

### FIELD OF THE INVENTION

The present invention relates to a substrate comprising a mussel adhesive protein and to a method of coating a substrate with a mussel adhesive protein.

### BACKGROUND OF THE INVENTION

There is an increasing demand for microfluidic devices for applications in, for example, the biotechnology and the pharmaceutical industries. For example, a microfluidic device may advantageously be used as a microbioreactor, or in a biological assay as only a small amount of reagent and sample is required. Other fields of recent applications of microfluidic devices include portable power generation, data-storage, optofluidic lasers, and fiber-optic communication, among others.

Microfluidic devices are commonly manufactured by replication of a pattern from a master tool to a polymer substrate. Examples of such methods include (i) microembossing, wherein a pattern is embossed onto a polymer substrate, (ii) micro-injection molding, wherein a melted polymer is injected into microstructures present in a molding tool, and (iii) micro-casing, in which a mixture of polydimethylsiloxane (PDMS) and a curing agent is poured into a mold, such as silicon or polymethyl methacrylate (PMMA), cured and peeled off. The patterned polymer substrate is subsequently bonded to a glass substrate or other rigid substrate to form a tight seal for fluid flow. Hence, the microfluidic channel systems are often constructed using different parts of different material, which parts are typically assembled using a glue which thus represents an additional material, and consequently, the resulting channel system comprises wall surfaces with different surface properties, *e.g*. different hydrophobicity. Given that there is an increased surface-to-volume ratio in microfluidic channels compared to larger fluidic channels, the surface property of the wall surfaces in the microfluidic channels is an important aspect which may affect the functionality of the device.

Multiple wall surfaces with different surface properties of the microfluidic channels in a microfluidic device may cause an uneven flow profile in the channels and lingering air bubbles, and thereby impairing the performance of the device.

Another problem arises from the hydrophobic nature of the polymer substrate materials, for example PDMS, often used in the microfluidic devices, as such materials promote unspecific adhesion of hydrophobic components to the wall surface of the microfluidic channels due to strong hydrophobic interactions therebetween, for example, adhesion of bacterial cells present in an assay solution.

Schmolke *et al.* (Biomicrofluidics, 2010, 4(4), 044113) disclose a method for coating of already sealed PDMS-based microfluidic devices in order to minimize nonspecific adhesive interaction with hydrophobic microorganisms or particles. The hydrophilization method disclosed by Schmolke et al. involves adsorbing polyelectrolyte multilayers (PEMs) on the PDMS surface of the microfluidic channel using electrostatic forces. The polyelectrolyte multilayer comprises the combinations poly(diallyldimethylammonium chloride)/ poly(acrylic acid) and poly(allylamine hydrochloride)/ poly(acrylic acid) which are adsorbed layer-by-layer onto the PDMS surface by alternately dipping the substrate in two respective polymer solutions. A terminal layer containing a copolymer ofpoly(acrylic acid) is subsequently deposited onto the PEMs film. Schmolke et al. report a reduced cell adhesion strength of *S*. *cerevisiae* by at least two orders of magnitude compared to the bare PDMS surface. The disclosed method is, however, relatively complicated and is limited to the use of certain charged polyelectrolytes.

There is an interest of immobilizing and organizing particles, on various surfaces. For example, it is often desirable to integrate biomaterial functions into desired systems, such as a sensor. However, many biomaterials are prone to either attenuation of properties or decomposition under harsh chemical and physical conditions.

One possible method of immobilizing particles or biomaterials on a surface is to use self assembled monolayer (SAM) which is an organized layer of amphiphilic molecules having one end with specific affinity for a substrate, and another end with a functional group to which end particles or biomaterials may potentially be attached. However, SAM films are typically difficult to construct.

Recently, the concept of constructing layer-by-layer assembly has been suggested to immobilize functional molecules in an easily controllable thin film morphology.
In a layer-by-layer assembly the functional molecules may be sandwiched between polymeric layers arranged on the substrate. A typically method for providing such layer-by-layer assembly involves the use of an electrostatic interaction, similar to the method disclosed by Schmolke *et al..* For example, in a method for a layer-by-layer assembly the substrate may be connected to an anode and dipped into a solution containing cationic polyelectrolytes and anionic functional molecules *e.g*. proteins, causing the polyelectrolytes to deposit at the negatively charged surface of the substrate. This usually causes over-adsorption of the polyelectrolytes, resulting in a surface charge reversal, which in turn promotes the adsorption of anionic functional molecules until the surface charge is reversed again. Thus, the alteration of surface charge of the substrate yields a continuous fabrication of the layer-by-layer structure. By this method, films of nanometer-scale thickness may be achieved. The layer-by-layer assembly may, for example, be used to prepare a thin-film enzyme reactor designed for specific reaction sequences, and/or in various sensor applications.

However, a drawback with the layer-by-layer assembly is that the method typically relies on electrostatic interactions and is thus limited to the use of electrically conductive substrates, certain charged polyelectrolytes, and only charged functional molecules can be immobilized.

### SUMMARY OF THE INVENTION

In view of the above-mentioned and other drawbacks of the prior art, a general object of the present invention is to at least partly overcome the problems of the prior art and to provide a method for modifying the properties of a surface.

The present inventors have found that this and other objects can be achieved by utilizing a mussel adhesive protein to provide a highly functionalizable surface.

The present invention is based on the realization that the known adhesive properties of a mussel adhesive protein can advantageously be used to control the surface properties of the wall surfaces in a fluidic channel, for example to homogenize a micro-fluidic channel having multiple surface properties, and/or to immobilize particles, *e.g*. functional molecules, on a substrate, for example in a layer-by-layer assembly.

The known adhesive properties of a mussel adhesive protein have earlier been suggested for medical devices. In WO 2010/091298 A1, new synthetic medical adhesives which exploit the key components of natural marine mussel adhesive proteins have been presented. WO 2010/091298 A1 teaches bioadhesive construct comprising a support for tissue repair or reconstruction, a first coating comprising a multihydroxyphenyl functionalized polymer, and optionally a second coating comprising a multihydroxyphenyl functionalized polymer is disclosed.

In WO 2006/038866 A1, an implantable medical device at least partly coated with a bioadhesive composition has been presented. WO 2006/038866 A1 teaches a bioadhesive composition forming a first layer comprises a bioadhesive polyphenolic protein derived from a byssus-forming mussel. The bioadhesive composition may be coated by a further layer comprising at least one compound selected from the group of heparin, hyaluronic acid, dextransulphate, heparansulphate, sulphated carbohydrates, non-sulphated carbohydrates, polyvinylpyrrolidone, chitosan, modified polyethylene species, fibrogen and polyimine.

Hence, according to a first aspect of the invention, this and other objects are achieved through a method of modifying the properties of a surface, comprising the step of: coating the surface with a mussel adhesive protein such that a first layer comprising the mussel adhesive protein is achieved on the surface, and providing a second layer comprising a first plurality of particles on the first layer comprising the mussel adhesive protein. The attachment of the particles is facilitated by the adhesive properties of the mussel adhesive protein.

Typically, the first plurality of particles are molecules or particles having a given functionality. Thus, the inventive method according to the invention provides means for effective attachment or immobilization of *e.g*. functional molecules without affecting the functionality of the molecules.

The term "mussel adhesive protein" or "MAP" should be understood as any bioadhesive protein derived from byssus-forming mussels, including bioadhesive proteins, or derivates or fragments thereof, extracted from such mussels, or the corresponding bioadhesive proteins, or derivates or fragments thereof, recombinantly produced, or peptides designed to mimic the adhesive properties of MAP. Mussel adhesive proteins are known in the art, and the skilled person would understand that the scope of the claimed invention is not limited any particular mussel adhesive protein, also known as polyphenolic proteins, as essentially any polypeptide exhibiting an adhesive property may be used. Typically, such adhesive polypeptides may comprise a relatively high content of L-3,4-dihydrophenylalanine (DOPA), for example at least 3% of the amino acid sequence of the polypeptide may be DOPA.

In an example, the surface to be coated may be hydrophobic. For example, the surface may typically be a polymer surface such as a parylene surface, a polytetrafluoroethylene (PTFE) polymer (*i.e*.Teflon) surface, a glass surface, a composite material surface *e.g*. a surface on printed circuit board (PCB) comprising woven glasfibers and epoxy resin binder, a gold surface, a silver surface, a platina surface, a copper surface, or a film comprising Fe-Ni-Mb-V. However, according to an example, also surfaces with more hydrophilic properties may be coated. The method according to the invention allows substrates, comprising any one of the above-mentioned surfaces, to have virtually any dimensions and shape, for example, planar surfaces, cylindrical fibers, like optical fibers, surfaces having periodic or aperiodic structures, *e.g*. metallic leads or components attached to polymers or PCBs. By coating the surface with a first layer comprising a mussel adhesive protein, hydrophilization as well as homogenization of the surface properties may be achieved in one step.

In embodiments of the invention, the method may further comprise the steps of: coating the second layer comprising the first plurality of particles with a mussel adhesive protein such that a third layer comprising a mussel adhesive protein is achieved on the second layer; and providing a fourth layer comprising a second plurality of particles on the third layer comprising the mussel adhesive protein. Thereby, a layer-by-layer assembly may be achieved, wherein functional molecules may be incorporated. The method according to the invention may thus advantageously be used for manufacturing of highly functionalized surfaces, for example, catalytic surfaces for use in *e.g*. biological assay/ bioreactions or other reactive surfaces for various sensor applications.

According to embodiments of the invention, the layers of a plurality of particles provided by the inventive method are mono-layers. This is because the attractive force to the surface is mediated by the mussel adhesive protein, and upon the formation of a mono-layer of particles on the mussel adhesive protein, no more particles will be bound (or will only be bound by weak bonds and so such additional particles may be readily washed off from the surface).

By the term "monolayer" is herein meant a single, closely packed layer of atoms or molecules.

In an example embodiment, the method may comprise at least the steps of coating a surface with a first layer of MAP, and of providing a second layer of a first plurality of particles on at least a portion of the first layer of MAP, wherein said second layer is a monolayer. In another example embodiment, the method may further comprise the steps of coating the second layer of a first plurality of particles with a third layer of MAP, and of providing a fourth layer of a second plurality of particles on at least a portion of the third layer of MAP, wherein both said second layer and said fourth layer are monolayers.

In embodiments of the invention, the method may involve coating the fourth layer with additional alternating layers of mussel adhesive protein and plurality of particles, respectively, thereby the ultimate thickness of the layer-by-layer assembly may be accurately controlled.

According to another inventive concept, surface properties of surfaces exposed to fluids *e.g*. a fluidic channel comprising at least a first wall surface may be homogenized by coating the first wall surfaces with mussel adhesive protein. Another example where the present invention can be applied is to modify surfaces of microtiter plates or other devices used for handling or analysis of liquid samples.

In an example embodiment, the surface properties of a fluidic channel comprising at least a first wall surface and a second wall surface, the first and second wall surfaces having different surface properties may be homogenized by coating both the first and the second wall surfaces with the mussel adhesive protein.

The fluidic channel may for example be a microfluidic channel, which may typically be manufactured by assembling different parts of different materials, for example, by attaching upper and lower plates with U-shaped grooves, wherein the upper and lower plates are of different material having different surface properties, and thus the fluidic channel may comprise a wall surface with portions with different surface properties.

By coating all surfaces of a fluidic channel with a mussel adhesive protein a homogeneous wall surface having the same surface properties (*e.g*. hydrophilic) may be achieved. As a result, lingering air bubbles in the fluidic channel may be reduced.

According to an example, the step of coating may comprise contacting the fluidic channel with a solution comprising the mussel adhesive protein. For example, by flowing a solution comprising the mussel adhesive protein through the fluidic channel, or by immersing the fluidic channel into a solution comprising the mussel adhesive protein. Thereby, a uniform coating on all wall surfaces of the fluidic channel may easily be achieved.

In an example, the method may further comprise the step of contacting the fluidic channel comprising the coating of the mussel adhesive protein with a buffer solution having a pH > 7.8, in the presence of an oxidizing agent, thereby cross-linking the mussel adhesive protein and thus further stabilizing the layer of mussel adhesive protein. For example, the oxidizing agent may be one of sodium periodate, Cu²⁺- ions, or an enzyme such as catecol oxidase, or molecularly dissolved oxygen in the buffer solution.

In an example, the method may further comprise the step of: contacting the fluidic channel comprising the coating of the mussel adhesive protein with a solution comprising a blocking agent, thereby attaching a blocking agent to the mussel adhesive protein. Thereby, the surface properties may be controlled to be less adhesive, *i.e*. more inert, such that interactions with components in the fluid may be reduced. Alternatively, or in addition, the blocking agent may be selected such that specific interactions with certain components are achieved.

For example, the blocking agent may be bovine serum albumin (BSA), poly(ethylene glycol) (PEG), gelatin from fish or pig, casein, serum from goat or rabbit, poly(ethylene oxide)-poly(L-lysine) copolymer, or poly(ethylene glycol)-poly(L-lysine) copolymer, phosphonates, or other blocking agents known in the art. The blocking agents readily adsorb to the layer of mussel adhesive protein and substantially deactivate the surface for any further interactions with *e.g*. components in the flowing fluid.

According to a second aspect of the invention, the above-mentioned and other objects are achieved through a device comprising a substrate having a first surface; a first layer comprising a mussel adhesive protein, the first layer being arranged on the first surface; and a second layer comprising a first plurality of particles attached to at least a portion of the mussel adhesive protein of the first layer.

Preferably, the first layer and the second layer form separate layers.

In an embodiment, the second layer is a monolayer.

In embodiments of the invention, the device may further comprise a third layer comprising a mussel adhesive protein, the third layer being arranged on the second layer, and a fourth layer comprising a second plurality of particles attached to the mussel adhesive protein of the third layer.

In an embodiment, both the second layer and the fourth layer are mono layers.

According to an embodiment of the invention, the third layer may be arranged to only partly cover the second layer, such that both particles of the first plurality of particles and particles of the second plurality of particles are exposed.

The device according to this embodiment may, for example, be used as a sensor, a catalyzing device, or for readout of an electrochemical sensor system.

The device may be a sensor member for interacting with a component of a fluid upon contact of said fluid with said device. The layers of the device being exposed to the fluid are generally the layers that may directly interact with components of the fluid. For instance, both particles of the first plurality of particles and particles of the second plurality of particles may directly interact with a component of a fluid, if the third layer is arranged to only partly cover the second layer.

Upon contact with a fluid, the particles of the first plurality may interact with a first component of the fluid, and the particles of the second plurality may interact with a second component of the fluid, when the third layer is arranged to only partly cover the second layer. Optionally, said first component and said second component of the fluid may further interact with each other, and the device may consequently function as a catalyst.

If the third layer is arranged to only partly cover the second layer, a component of a fluid, wherein the component is not water-solvated, may interact directly with both particles of the first plurality of particles and particles of the second plurality of particles.

When a subsequent layer only is partly covering the underlying layer, several layers may be exposed, and consequently, not only the layer applied on top of a layer-by-layer assembly is exposed. By exposing several layers, a three-dimensional structure may be formed, which is advantageous in many applications.

According to an embodiment of the invention, the first plurality of particles comprises particles being different from particles comprised in the second plurality of particles.

Preferably, the particles of the first plurality of particles have a different functionality than the particles of the second plurality of particles.

According to an embodiment of the invention, the second layer has a first density of particles and the fourth layer has a second density of particles. The first density is different from the second density.

The first and/or second plurality of particles may be particles or molecules having a given functionality. For example, the first and/or second plurality of particles may comprise a pH-sensitive functional group, or the first and/or second plurality of particles may be polymer particles, e.g. molecularly imprinted polymers, or at least one of the first and second plurality of particles may comprise particles each having a metallic surface, such as for example a gold surface or a silver surface or a platina surface, for use as probes for localized surface plasmon resonance detection. Further, the first and/or second plurality of particles may comprise particles with a core, such as quantum dots and/or particles comprising both a metal and a molecularly imprinted polymer.

The size of the particles of the first and/or second plurality of particles may be within the range of from 5 nm to 35 µm, e.g. from 5 nm to 20 µm. Preferably, the size of the particles of the first and/or second plurality of particles are larger than 100 nm.

The polymer particles may have a size within the range of from 20 nm to 35 µm, for example from 20 nm to 20 µm, such as from 200 nm to 20 µm. Molecularly imprinted polymers may have a size within the range of from 5 µm to 35 µm, preferably about 20 µm. Preferably, polymer nanoparticles have a size within the range of from 150 nm to 800 nm, e.g. from 150 nm to 500 nm, for instance about 200 nm.

For example, the particles may be nanoparticles of gold or silver or platina having diameters > 10nm, or particles coated with a layer of gold or silver or platina. Preferably, the size of the metallic particles is within the range of from 20 nm to 500 nm, such as from 150 nm to 500 nm. Such metallic particles may optionally be further functionalized before or after attachment thereof to the mussel adhesive protein. Examples of such functionalization includes attachment of antibodies, enzymes, aptamers such as DNA or RNA or peptides, probes such as DNA or RNA for hybridization, ligands (receptors) such as membrane proteins or glycolipids for bacterial or viral adhesion to target cells.

In an example, the device may comprise a fluidic channel having a wall surface comprising the first layer comprising the mussel adhesive protein.

According to an example, the mussel adhesive protein may be cross-linked.

In an example, a blocking agent, as described above, may be attached to the mussel adhesive protein.

In embodiments of the invention, the device may comprise a fluidic channel, as described above, which may advantageously be comprised in a fluidic device further comprising an inlet and an outlet for allowing a flow of a liquid through the fluidic channel; and at least one sensor member arranged in the fluidic channel for sensing and/ or interacting with a component in the flowing liquid.

According to embodiments of the invention, the sensor member may advantageously comprise a device according to an embodiment of the invention. For example, the sensor member may be a device comprising: a substrate having a first face, a first layer comprising a mussel adhesive protein arranged on the first face, and a second layer comprising a first plurality of particles attached to the mussel adhesive protein of the first layer, whereas the first plurality of particles comprises a desirable functionality, *e.g*. a pH-sensitive functional group, for use in a given application of the fluidic device.

### BRIEF DESCRIPTION OF THE DRAWINGS

These and other aspects of the present invention will now be described in more detail, with reference to the appended drawings showing example embodiments of the invention, wherein:
Fig. 1 is a flow chart schematically illustrating a method for homogenizing the surface properties of a fluidic channel using a mussel adhesive protein according to an embodiment of the invention;
Figs. 2a-b schematically illustrate a cross-section of the fluidic channel manufactured according to the method of Fig. 1 in states following the corresponding method steps;
Fig. 3 is a flow chart schematically illustrating a method for manufacturing a device comprising a layer-by-layer assembly arranged on a substrate using a mussel adhesive protein according to the invention;
Figs. 4a-e schematically illustrate a cross-section of the layer-by-layer assembly manufactured according to the method of Fig. 3 in states following the corresponding method steps,
Fig. 5 shows a cross-sectional view of an embodiment a micro-fluidic device according to the invention,
Figs. 6a-b show a PCB substrate coated with the mussel adhesive protein; Figs. 7a-b show nanoparticles deposited onto a film of mussel adhesive protein on a microscope glass surface;
Figs. 8a-c show profilemeter scans of a layer nanoparticles deposited onto a film of mussel adhesive protein; and
Figs. 9a-b show large, diameter 20µm (±15µm) imprinted nanoparticles attached onto a MAP-film on a coil electrode.

### DESCRIPTION OF EXAMPLE EMBODIMENTS OF THE PRESENT INVENTION

In the following description, the present invention is described with reference to a method for configuring the surface properties of a substrate using a mussel adhesive protein, to a substrate comprising a first layer comprising a mussel adhesive protein, and to a fluidic device comprising such substrate.

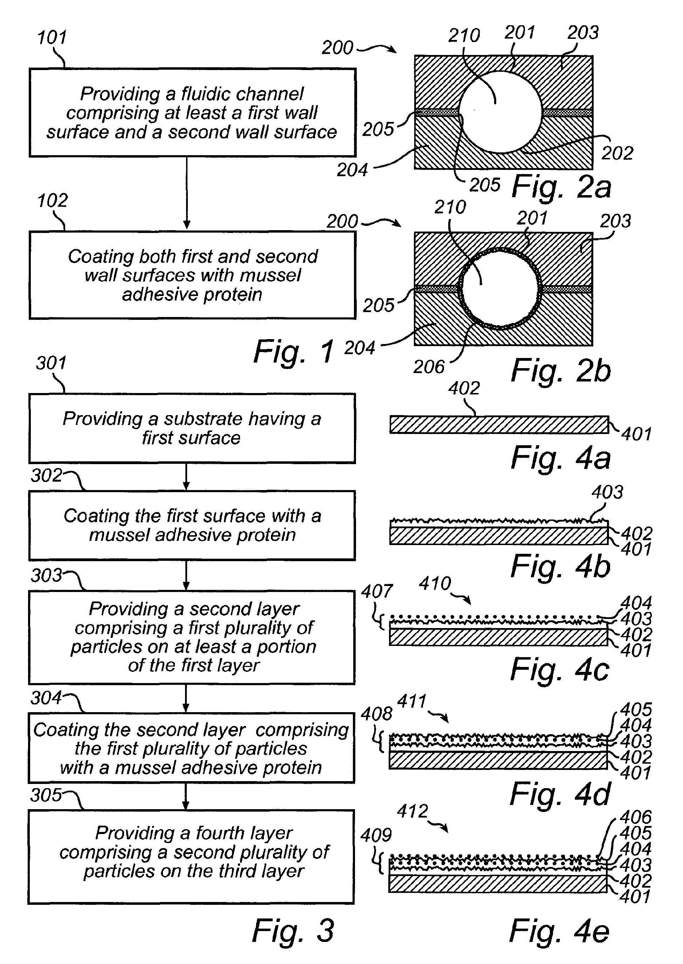

An embodiment of a fluidic channel according to the invention and a method for homogenizing the surface properties of the wall surfaces of such a fluidic channel will now be described with reference to Fig. 1 which is a flow chart schematically illustrating such a method and Figs. 2a-b which schematically illustrate a cross-section of the fluidic channel in states following the corresponding method steps of Fig. 1.

In a first step 101, a fluidic channel 210, comprising at least a first wall surface 201 and a second wall surface 202, is provided, where the first wall surface 201 is different from the second wall surface 202. The fluidic channel may for example be a microfluidic channel having a channel diameter (or cross-section) in the range of *e.g*. from 100 nm to 1 mm. Typically, microfluidic channels may be formed by gluing a top substrate 203 of a first material having a U-shaped groove to a base plate 204 of a second material having a U-shaped groove. A device 200 comprising such a fluidic channel 210 is illustrated in Figs. 2a-b. Thus, given that the first and second materials may be different, and/or that the glue material 205 is different from the first and second material, the fluidic channel 210, as embodied in Figs. 2a-b, comprises at least two different wall surfaces: a first wall surface 201 of the first material, a second wall surface 202 of the second material, and a third wall surface 205 of the glue material. It should be noted that microfluidic channels may typically further comprise additional members of different material such as for example a sensor. A problem associated with a fluidic channel with wall surfaces of different material and thus different surface properties is that the fluid flowing through the channel may interact differently with the different surfaces which in turn may cause various flow-related problems and formation of air bubbles in the channel systems, which is particularly troublesome in case the fluidic channel is being used in a sensor device.

In the next step 102, all wall surfaces 201, 202, 205 of the fluidic channel 210 are coated with a mussel adhesive protein 206. The step of coating may comprise contacting the fluidic channel 210 with a solution comprising the mussel adhesive protein. For example, the coating is typically carried out by flowing a solution comprising a mussel adhesive protein through the fluidic channel 210. Alternatively, the coating may be achieved by immersing the fluidic channel 210 into a solution comprising a mussel adhesive protein. Using this method a first layer comprising a mussel adhesive protein 206 is uniformly provided on all wall surfaces 201, 202, 205 of the fluidic channel, and thereby a homogeneous wall surface 206 in the fluidic channel is ensured. The first layer 206 comprising the mussel adhesive protein is hydrophilic which may be advantageous for many applications of the fluidic channel 210, for example, to reduce surface interactions with hydrophobic biomolecules such as bacterial cells.

Furthermore, the surface properties of the first layer 206 comprising the mussel adhesive protein may optionally be further modified by additional steps according to embodiments of the inventive method. For example, the mussel adhesive protein may be stabilized by cross-linked thereof, which can be achieved by contacting the fluidic channel 210 comprising the coating of the mussel adhesive protein 206 with a buffer solution having a pH > 7.8 in the presence of an oxidizing agent, for example, by flowing a buffer solution having a pH > 7.8 through the fluidic channel 210, or by immersing the fluidic channel 210 into a buffer solution having a pH > 7.8. Examples of such buffer solution include N,N-Bis(2-hydroxyethyl)glycine (BICINE) buffers, 3-[4-(2-Hydroxyethyl)-1-piperazinyl]propanesulfonic acid (HEPPS) buffers, triethylamine-based buffers, and buffers based on tris(hydroxymethyl)aminomethane (Trizma®). Examples of oxidizing agents include sodium periodate, catecol oxidase, Cu²⁺, or molecularly dissolved oxygen. Alternatively, blocking agents may be attached to the mussel adhesive protein of the first layer. For example, the blocking agent may be bovine serum albumin (BSA), poly(ethylene glycol) (PEG), gelatin from fish or pig, casein, serum from goat or rabbit, poly(ethylene oxide)-poly(L-lysine) copolymer, or poly(ethylene glycol)-poly(L-lysine) copolymer, phosphonates, or other blocking agents known in the art (see e.g. Sentandreu, M.A. et al., Eur. Food Res. Technol. 2007, 224, 623-628; Pasche, S. et al., J. Phys. Chem. B 2005, 109, 17545-17552; Ellen S. Gawalt et al., Langmuir 2003, 19, 200-204; G. Lecollinet et al., Langmuir 2009, 25(14), 7828-7835; Kristina Reimhult et al., Langmuir 2008, 24, 8695-8700). The blocking agents can advantageously be attached to the adhesive first layer by contacting the fluidic channel 210 comprising the coating of the mussel adhesive protein 206 with a solution comprising a blocking agent, for example by flowing a solution comprising the blocking agents through the fluidic channel 210, or by immersing the fluidic channel 210 into the same solution.

Thereby the wall surfaces of the fluidic channel may be controlled to be substantially inert which may be desirable in order to avoid unspecific and undesirable interactions between components of the fluid and the wall surface. However, in other embodiments of the invention, other agents may be attached to the mussel adhesive protein in order to gain specific interaction with certain components of the fluid. Subsequently to the attachment of a blocking agent, the mussel adhesive protein may be cross-linked as described above.

An embodiment of a device comprising a layer-by-layer assembly arranged on a substrate according to the invention and a method for manufacturing thereof using a mussel adhesive protein will now be described with reference to Fig. 3 which is a flow chart schematically illustrating such a method and Fig. 4a-e which schematically illustrate a cross-section of the layer-by-layer assembly in states following the corresponding method steps of Fig. 3.

In the first step 301 a substrate 401 having a first surface 402 is provided. For example, the substrate may be of a polymeric material having a first polymeric surface or the substrate may be of a glass material having a glass surface, or the substrate may comprise a carrier portion of a polymer and/or glass with a top layer, *e.g*. a film having a first surface, where such film may, for example, comprise, parylene, polytetrafluoroethylene (PTFE) polymer (*i.e*.Teflon), composite material of a printed circuit board (PCB), gold, silver, copper, or a combination of Fe-Ni-Mb-V. In embodiments of the invention, the substrate 401 may be a microtiter plate having a first well surface, or the substrate may be any devices used for handling or analysis of liquid samples.

The next step 302 involves coating the first surface 402 of the substrate 401 with a mussel adhesive protein 403, which may be achieved by immersing the substrate into a solution comprising a mussel adhesive protein.

In the next step 303, a second layer 404 comprising a first plurality of particles is provided on at least a portion of the first layer 403 comprising the mussel adhesive protein. According to an embodiment of the method, the plurality of particles 404 may be attached to mussel adhesive protein of the first layer 403 by applying a suspension comprising the particles 404 on a desirable portion(s) of the first layer 403, thereby a desirable pattern of second layer(s) of a first plurality particles 404 may be achieved on the first layer 403.

The next step 304 involves coating the second layer 404 comprising the first plurality of particles with a mussel adhesive protein such that a third layer 405 comprising the mussel adhesive protein is achieved on the second layer 404 .

In the next step 305, a fourth layer 406 comprising a second plurality of particles is provided on the third layer 405 comprising the mussel adhesive protein.

Using the inventive method, a device 410, 411, 412 comprising a layer-by-layer assembly 407, 408, 409 comprising alternating layers of mussel adhesive protein and particles, respectively, may easily be provided. In the exemplary embodiment shown in Figs. 4a-e, up to four layers 403, 404, 405, 406 are provided, however, using the method according to the invention many more layers may be provided. Moreover, the layer of a plurality of particles provided by the inventive method are typically mono-layers, as the attachment of the particles to the mussel adhesive protein is facilitated by the adhesive properties of the mussel adhesive protein, and consequently, upon the formation of a mono-layer of particles on the layer of mussel adhesive protein, no more particles will be bound.

Thereby, the thickness of the assembly on the substrate may easily be controlled by adapting the number of layers and/or by the size of the particles, *i.e*. the thickness of each mono-layer.

The density of, or distance between, the particles in each layer of particles will at least partly depend on repulsive forces between the particles, and thus the density of the particles in each layer may be controlled by adapting the repulsive surface properties of the particles, and/or by adapting the ionic strength of the suspension of particles, before applying the suspension on the layer of mussel adhesive protein, that is, by adapting the ionic strength of the suspension the repulsive forces between the particles may be shielded to a desirable extent.

By adjusting a property, e.g. the density, of a layer, a specific functionality of the layer may be obtained. By adjusting the functionality of each layer and also the configuration of the layers relative each other, a layer-by-layer assembly with a tailored functionality may be formed.

A subsequent layer may cover the previously applied layer completely or partly. For instance, the second layer comprising a first plurality of particles may be attached to only a portion of the first layer comprising MAP. Similarly, the third layer comprising MAP may only be coated on a portion of the second layer comprising a first plurality of particles. By varying the covering of the applied layers, a layer-by-layer assembly with a tailored 3-dimensional functional structure e.g. with increased surface area, may be formed. A tailored 3-dimensional functional structure may be advantageous in many applications.

For instance, a layer-by-layer assembly having both a portion of the first plurality of particles in the second layer and a portion of the second plurality of particles in the fourth layer exposed, may be formed. Similarly, a layer-by-layer assembly exposing MAP of several layers comprising MAP, e.g. MAP of both the first layer and the third layer, may be formed.

Typically, the first and/or second plurality of particles alters both the chemistry and the topography of the original substrate.

The first and following layer of particles may typically comprise particles or molecules having a desirable functionality. For example, the plurality of particles may be polymers with a pH-sensitive functional group, for example, nanoparticles (having a particles size of about 200 nm) of poly(vinylbenzyl chloride-trichlorophenyl acrylate) (polyVBC-TCPA) functionalized with diethanolamine to introduce a pH-sensitive functional group. In other embodiments of the invention the plurality of particles may be molecularly imprinted polymers (having a size of about 25 µm) of, for example, poly(methacrylic acid) comprising a functional group of trimethylpropane trimethacrylate and azobisisobutyronitrile. Alternatively, the plurality of particles may be nanoparticles comprising a gold or a silver or a platina surface, for example commercially available gold nanoparticles with diameters > 10 nm, and such particles may carry various functionalities including, for example, antibodies, aptamers such as DNA or RNA or peptides, probes such as DNA or RNA for hybridization, ligands (receptors) such as membrane proteins or glycolipids for bacterial or viral adhesion to target cells. It should be noted that given the adhesive nature of the mussel adhesive protein a vast number of different particles, functional molecules, or biomolecules may be attached to the layer of mussel adhesive protein, to give a desirable function and/or property.

The mussel adhesive protein is water permeable, thus any water-solvated components, *e.g*. a substance in a solution, may pass through an outer layer comprising the mussel adhesive protein to interact with an underlying layer comprising immobilized particles. Thus, the layer-by-layer assembly of the invention may advantageously be used to construct highly functionalized surfaces.

In embodiments of the invention the first and the second plurality of particles may be different, thereby providing a multi-functional substrate. For example, a device comprising a substrate a layer-by-layer assembly according to the invention may be a sensor, wherein the first plurality of particles may be polymers with a pH-sensitive functional group and the second plurality of particles may be silver particles, where the silver particles function to prevent the formation of biofilm on the pH-sensitive substrate, and thereby increasing the life-time of the sensor. In another example, the first plurality of particles may comprise a first biomolecule, for example a catalytic molecule or enzyme which is able to first bind a substrate present in *e.g*. a solution in contact with the substrate, and to subsequently catalyse a reaction of the substrate, and the second plurality of particles may comprise a second biomolecule, for example a different catalytic molecule or enzyme which can bind the reaction product(s) from the first catalytic reaction. Thereby, using the layer-by-layer assembly according to the invention, advanced catalytic cascades may be constructed on a substrate, which may for example be used in a biological assay or in catalytic processes.

In an example, the particles in the first plurality of particles may be enzymes, and the particles in the second plurality may be electron acceptors or electron donators. A layer-by-layer assembly may be formed by, in order, providing a first layer of MAP, a second layer of enzymes, a third layer of MAP, and a fourth layer of electron acceptors or electron donators, and so forth, on a substrate. Such a layer-by-layer assembly may for instance be used for readout of an electrochemical sensor system. Preferably, the layers comprising the first and second plurality of particles, respectively, in the layer-by-layer assembly are monolayers.

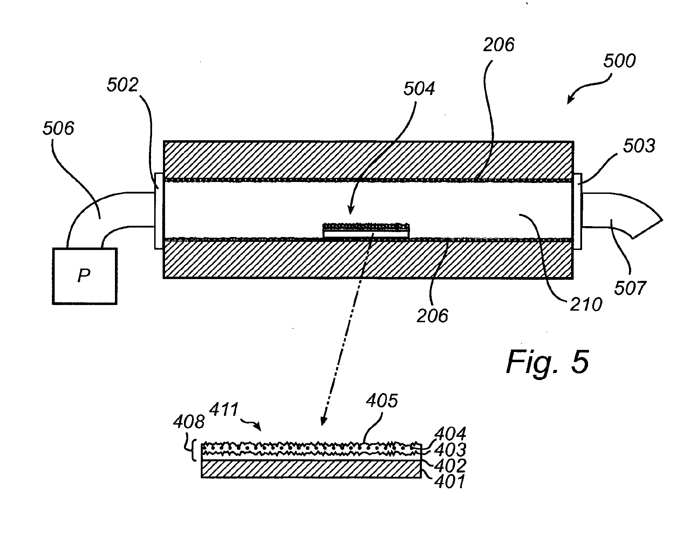

Fig. 5 shows a cross-sectional view of an embodiment a microfluidic device 500 according to the invention, comprising a microfluidic channel 210, an inlet 502 and an outlet 503, and a sensor member 504. A pump P is connected to the inlet 502 via a first tubing 506 to provide a flow through the channel 210. A second tubing 507 is connected to the outlet 503 for collection of the flowing fluid. The microfluidic channel 210 may advantageously comprise a homogeneous wall surface comprising a first layer 206 of mussel adhesive protein according to embodiments of the invention. Furthermore, as shown in Fig.5, the sensor member 504 may be arranged within the micro-fluidic channel 210 of the device 500, and which sensor member 504 may advantageously comprise a device 411 according to an embodiment of the invention. As shown in Fig. 5, the device 411 comprises a substrate 401 coated with the layer-by-layer assembly 408 comprising alternating layers of mussel adhesive protein 403, 405 and immobilized particles 404 having a desirable functionality for a given application of the sensor member.

For example, the microfluidic device may be used for optical sensing, wherein the microfluidic channel may comprise a sensor member comprising a layer-by-layer assembly comprising alternating layers of mussel adhesive protein and nanoparticles of gold and/or silver, respectively, for use as probes for localized surface plasmon resonance (SPR) detection. Thereby, giving a 3-dimensional functional structure with increased surface area, and as a result, giving a stronger optical response signal, compared to the 2-dimmensional structures (currently used in the art) for SPR detection. Alternatively, or in addition, the microfluidic channel may have a wall surface comprising a first layer of mussel adhesive protein, which first layer may be partly or completely covered by a single layer, or a layer-by-layer assembly, comprising immobilized nanoparticles of gold and/or silver for use as probes for localized surface plasmon resonance (SPR) detection.

Additionally, variations to the disclosed embodiments can be understood and effected by the skilled person in practicing the claimed invention, from a study of the drawings, the disclosure, and the appended claims. For example, due to the adhesive nature of the mussel adhesive protein a vast number of different particles, functional molecules, or biomolecules may be attached to the layer of mussel adhesive protein, to give a desirable function and/or property.
The advantages of the invention have been demonstrated in experiments.

### EXAMPLES

### Mussel adhesive protein

The mussel adhesive protein or "MAP" used in these example experiments is extracted directly from mussel foot. Typically, the mussel adhesive protein is provided in an aqueous buffer solution containing 2-60 mg/ml of MAP and 1% citrate.

### Generic protocol for providing a layer-by-layer assembly

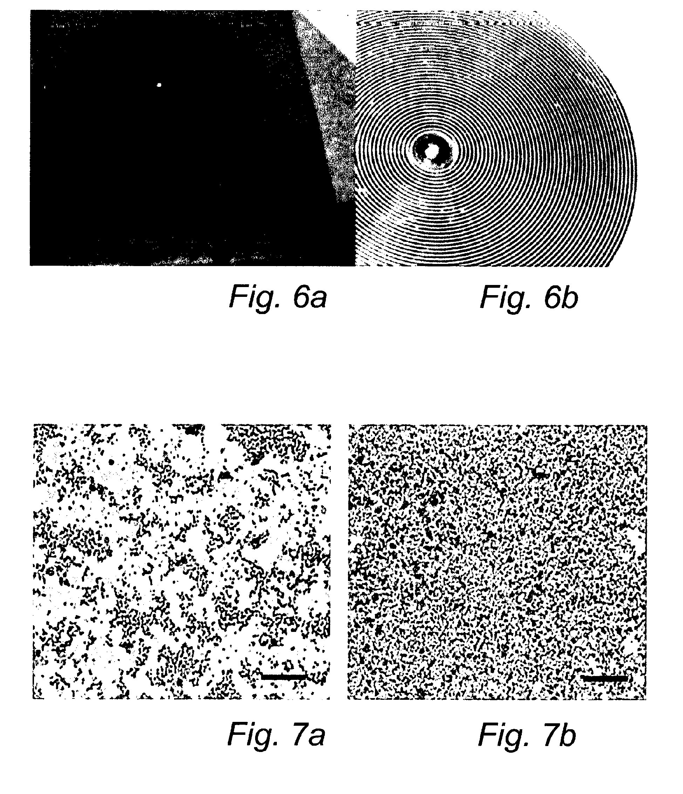

1. Dissolve mussel adhesive protein (MAP) in a MilliQ water or in a phosphate buffer, or in a similar buffer (citrate buffers, etc.). Concentrations of > 200 µg/ml are sufficent. The pH of the buffer should be below the value at which substantial protein polymerisation takes place, *i.e*. below 7.8 pH units.
2. Dissolve particles in an appropriate solvent. Organic solvents, *e.g*. ethanol, are acceptable. Make sure the solvent does not denature the MAP protein.
3. Sonicate nanoparticle suspension. Keep sonication on until a certain, specifically chosen time interval before it will be applied onto the substrate. If the particle sizes spread over a large interval, large particles will sediment while smaller particles will remain in suspension starting from certain size, D_{colloid}. The sedimentation is fast for larger particles but the sedimentation time increases when particle size decreases towards D_{colloid}. Therefore by ending sonication some time before applying suspension onto a MAP covered substrate allows one to choose the nanoparticle size. In one practical case, when depositing the pH sensitive polymer (see *e.g*. Fig. 7) we have waited about 1h after sonication before starting deposition particles. During that time most of the large particles sedimented and the originally milky suspension became transparent. We have shown that the particles that remained after 1h constituted a colloidal solution. Their diameter was ≤ 200 nm. In case of 50 nm sized gold nanoparticles one does not need to wait since the suspension is colloidal and therefore stable in time over hours.
4. Rinse the substrate with deionized water.
5. Immerse the substrate into a MAP solution for at least 2.5 hours.
6. Rinse the substrate with deionized water.
7. Apply droplets of suspended nanoparticles onto a MAP covered substrate until they cover the area of interest.
8. Wait until droplets are dry and then rinse the substrate with deionized water.
9. Check the coverage using suitable technique.
10. If it is too low (because of the low concentration of particles of chosen size in suspension) repeat 7 - 9 until sufficient coverage is obtained. For example, to reach near monolayer coverage of pH sensitive nanoparticles we needed at least 5 repetitions.
11. Check the coverage using suitable technique, for example by optical microscopy or using stylus profilometry, or AFM, or similar.
12. If one wants to deposit more than one monolayer than one should repeat steps 5-11. For example, to deposit three monolayers we have repeated steps 5-11 three times.

Note that after first deposition of mussel adhesive protein onto a substrate that should take a prolonged time, as mentioned in step 5 (above), if one is to achieve superior quality nanoparticle layer regarding its density, subsequent mussel adhesive protein depositions can be much faster, they can be interrupted already after 20 minutes.

Moreover, similar protocols as the one given in the example apply to most of the materials. One either immerses the substrate covered by the MAP-film into a suspension containing the material to be doposited for some time, usually in excess of 1 hour, or one applies small droplets of the suspension containing the material in question onto a substrate covered by the MAP-film and lets the droplets to dry, followed by rinsing away superfluous material.

### Coating of a microfluidic channel with a mussel adhesive protein

Microfluidic channels were covered by a monolayer of mussel adhesive protein (MAP) by either immersing them in a suspension containing more than 200 µg /ml of MAP for more than 2.5 hours, and vorticing gently, or by leting the suspension with MAP flow at a low speed under laminar flow, Re<50 for few hours.

### Cross-linking the mussel adhesive protein

Cross-linking can be a achieved by incubating the MAP coated surface in a buffer with a pH over 7.8, especially in the presence of oxidizing agents such as sodium periodate, catecol oxidase or Cu²⁺ ions, or molecularly dissolved oxygen in the buffer.

### Attachment of blocking agents

The adsorption of blocking agents onto a MAP covered substrate is relatively fast, occuring within 1 hour. One simply emerges the MAP coated substrate into a buffer containing the blocking agent, such as BSA, PEG or other commonly used agent at a concentration that exceeds the calculated amount needed for a single layer coverage of the area to be blocked. Normal concentrations can be > 0.2 mg/ml of BSA or > 1 mM for PEG. Analogous calculations can be made for other blocking agents.

### Adapting the density of attached particles

There are two routes to alter coverage:
(i) By increasing the concentration of the deposited material, for example the concentration of imprinted polymer particles or pH particles. Usually there is an upper limit for the concentration increase after which particles start to agglomerate.
(ii) Another route is by increasing the ionic strength of suspensions containing material to be deposited. This is possible since mussel adhesive protein is relatively insensitive to ionic strength. A simple way is to add an appropriate amount of NaCl. There is an upper limit of ionic strength beyond which the suspension will start to agglomerate.

### Results from example experiments

The present inventors have investigated the uptake of MAP films on clean hydrophilic Au-surface and on hydrophobic Au-surface contaminated (mainly) by hydrocarbons using gravimetric method (quartz crystal microbalance). The total uptake saturated at some 180 ng/cm² in both cases which strongly indicated that the uptake ceases at 1-2 monolayers. The rearrangement within the layer as measured by changed energy dissipation of the quartz microbalance proceeded long after the uptake ceased (after at most 30 min at the used MAP concentration) to increase, for at least 2.5 hours. The observed trend is similar to the one seen during adsorption of, e.g., alkenothiols or during cystein-ended peptides on clean Au where it is attributed to ordering of the adsorbed molecules. Similarly we have strong indications that rearrangement brings MAP ordering which results in denser and more uniform mono layers.

The inventors have used MAP to coat a number of different surfaces and evaluated the change in surface properties:
- Fe-Ni-Mb-V films: initially hydrophobic surface but changes into very hydrophilic (small but non-zero contact angle, very good droplet spreading) upon coating with MAP.
- Stainless steel: initially hydrophobic surface but changes into very hydrophilic (small but non-zero contact angle, very good droplet spreading) upon coating with MAP.
- Parylene films on various substrates: initially hydrophobic surface but changes into very hydrophilic (small but non-zero contact angle, very good droplet spreading) upon coating with MAP. This also creates a way to adsorb or chemically cross-link molecules or particles to the parylene surface that otherwise is quite inert.
- Gold: initially hydrophilic surface and remained very hydrophilic (small but non-zero contact angle, very good droplet spreading) upon coating with MAP..
- PCB: boards both Cu or Au covered as well as PCB polymer itself - initially hydrophobic surface but changes into very hydrophilic (small but non-zero contact angle, very good droplet spreading) upon coating with MAP..
- Optical microscope slides: boards both Cu or Au covered as well as PCB polymer itself - initially hydrophobic surface but changes into very hydrophilic (small but non-zero contact angle, very good droplet spreading) upon coating with MAP.

The MAP films although highly uniform and continuous were permeable to water and (at least) small-size ions and molecules or ions with Mw ≤ 400.

Figs. 6a-b show a PCB substrate with the electrode formed as planar coil, representing a chemically and topographically inhomogeneous surface where the metallic structures are 150 µm wide and a few µm high. The polymer-ridge of the spiral is also 150 µm. Figs. 6a-b correspond to the same surface in different magnification.

Figs. 7a-b show nanoparticles deposited onto a MAP-film on a microscope glass surface. The particles are about 200 nm large polymer nanoparticles made of poly (VBC-TCPA) spheres derivatized with diethanolamine to introduce a pH-sensitive functional group. These nanoparticles are pH sensitive and were subsequently used to measure pH in a rumen fluid *in-vitro* as well as *in-vivo* in the cow rumen. Fig. 7a shows low coverage deposit and Fig. 7b shows high coverage limits of the nanoparticle clusters deposited onto a MAP-film. The bar corresponds to a distance of 20 µm.

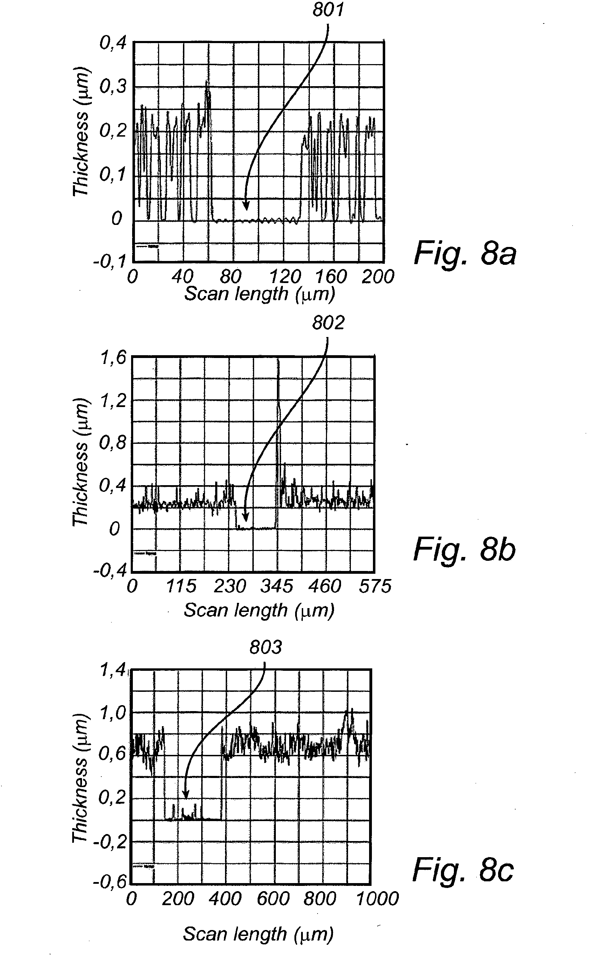

Figs. 8a-c show profilometer scans of a layer of nanoparticles deposited onto a film of mussel adhesive protein on a substrate, wherein the plots show the thickness of the layer of nanoparticles versus the scan length of the substrate. The open area 801, 802, 803 in the middle of each scan has been artificially introduced by scratching away the deposit with a needle.

Fig. 8a shows low coverage film similar to the one shown in Fig. 7a. Note that the open areas are large enough for the profilometer stylus to reach the substrate. Note also that nanoparticle diameter is about 200 nm. Fig. 8b shows high coverage film dense enough to prevent stylus penetration. The thickness shows clearly that nanoparticle sizes were around 200 nm. Fig. 8c shows dense monolayers of nanoparticles. Note that the thickness corresponds to three times a single monolayer, *i.e*. 600 nm.

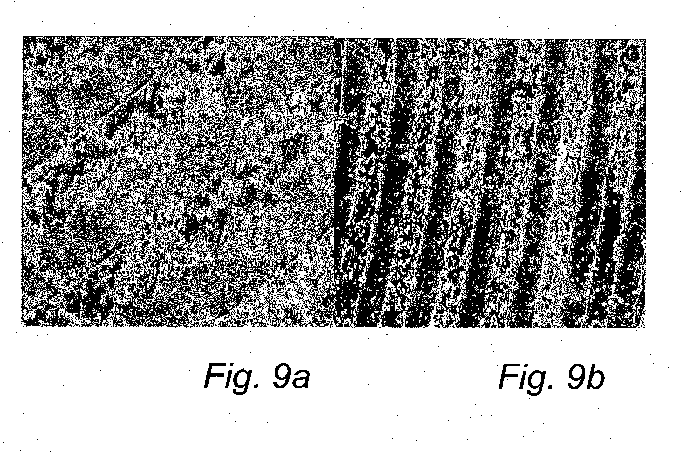

Figs. 9a-b show large, diameter 20 µm (±15µm) imprinted nanoparticles attached onto a MAP-film on a coil electrode similar to the one shown in Fig. 6. The coverage is relatively low, however, it will increase upon subsequent depositions as described in the deposition protocol above.

The inventors have also anchored molecularly imprinted polymers consisting largely methacrylic acid (MAA) with additional functional groups of trimethylpropane trimethacrylate and azobisisobutyronitrile (not shown). These particles were 25 µm in diameter.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

## Claims

1. A method of modifying the properties of a surface (402), comprising the steps of:
coating (302) said surface with a mussel adhesive protein (403; 405) such that a first layer (403) comprising said mussel adhesive protein is achieved on said surface, and
providing (303) a second layer (404) comprising a first plurality of particles on at least a portion of said first layer (403) comprising said mussel adhesive protein, wherein said second layer is a monolayer.

2. The method according to claim 1, further comprising the steps of:
coating (304) said second layer (404) comprising said first plurality of particles with a mussel adhesive protein such that a third layer (405) comprising said mussel adhesive protein is achieved on said second layer; and
providing (305) a fourth layer (406) comprising a second plurality of particles on said third layer comprising said mussel adhesive protein.

3. A device (410; 411; 412) comprising:
a substrate (401) having a first surface (402);
a first layer (403) comprising said mussel adhesive protein, said first layer being arranged on said first surface, and
a second layer (404) comprising a first plurality of particles attached to at least a portion of said mussel adhesive protein of said first layer, wherein said second layer is a monolayer.

4. The device (410; 411; 412) according to claim 3, further comprising:
a third layer (405) comprising a mussel adhesive protein, said third layer being arranged on said second layer (404), and
a fourth layer (406) comprising a second plurality of particles attached to said mussel adhesive protein of said third layer.

5. The device (410; 411; 412) according to claim 4, wherein said third layer (405) is arranged to partly cover said second layer (404), in such a way that particles of the first plurality of particles and particles of the second plurality of particles are exposed.

6. The device (410; 411; 412) according to claim 4 or 5, wherein said first plurality of particles (404) comprises particles being different from particles comprised in said second plurality of particles (406).

7. The device (410; 411; 412) according to any of claims 4 to 6, wherein said second layer has a first density of particles and said fourth layer has a second density of particles, and wherein said first density is different from said second density.

8. The device (410; 411; 412) according to any one of claims 4 to 7, wherein at least one of said first (404) and second (406) plurality of particles comprises a functional group.

9. The device (410; 411; 412) according to any one of claims 4 to 7, wherein said first (404) and second (406) plurality of particles comprises particles having a particle size within the range of from 5 nm to 35 µm.

10. The device (410; 411; 412) according to any one of claims 4 to 9, wherein said first (404) and/or second (406) plurality of particles are molecularly imprinted polymers having a particle size within the range of from 5 µm to 35 µm.

11. The device (410; 411; 412) according to any one of claims 4 to 9, wherein at least one of said first (404) and second (406) plurality of particles comprises particles each having a metallic surface such as a gold surface or a silver surface or platina surface.

12. The device (410; 411; 412) according to claim 11, wherein said metallic surface is functionalized.

13. The device (410; 411; 412) according to any one of claims 4 to 9, wherein said first (404) and/or second (406) plurality of particles are polymer nanoparticles having a particle size within the range of from 150 to 500 nm.

14. A fluidic device (500) comprising:
a device (200) comprising fluidic channel (210);
an inlet (502) and an outlet (503) for allowing a flow of a liquid through said fluidic channel; and
at least one sensor member (504) arranged in said fluidic channel for sensing and/ or interacting with a component in the flowing liquid, wherein said sensor member (504) comprises a device (410; 411; 412) according to any one of claims 4 to 13.

## Patentansprüche

1. Verfahren zum Modifizieren der Eigenschaften einer Oberfläche (402), das folgende Schritte umfasst:
Beschichten (302) der Oberfläche mit einem Muschelkleberprotein (403; 405), dergestalt, dass eine erste Schicht (403), die das Muschelkleberprotein umfasst, auf der Oberfläche entsteht, und
Ausbilden (303) einer zweiten Schicht (404), die eine erste Mehrzahl von Teilchen auf mindestens einem Abschnitt der ersten Schicht (403), die das Muschelkleberprotein umfasst, umfasst, wobei die zweite Schicht eine Monoschicht ist.

2. Verfahren nach Anspruch 1, das des Weiteren folgende Schritte umfasst:
Beschichten (304) der zweiten Schicht (404), die die erste Mehrzahl von Teilchen umfasst, mit einem Muschelkleberprotein, dergestalt, dass eine dritte Schicht (405), die das Muschelkleberprotein umfasst, auf der zweiten Schicht entsteht; und
Ausbilden (305) einer vierten Schicht (406), die eine zweite Mehrzahl von Teilchen umfasst, auf der dritten Schicht, die das Muschelkleberprotein umfasst.

3. Vorrichtung (410; 411; 412), die Folgendes umfasst:
ein Substrat (401) mit einer ersten Oberfläche (402);
eine erste Schicht (403), die das Muschelkleberprotein umfasst, wobei die erste Schicht auf der ersten Oberfläche angeordnet ist, und
eine zweite Schicht (404), die eine erste Mehrzahl von Teilchen umfasst, die an mindestens einem Abschnitt des Muschelkleberproteins der ersten Schicht angebracht sind, wobei die zweite Schicht eine Monoschicht ist.

4. Vorrichtung (410; 411; 412) nach Anspruch 3, die des Weiteren Folgendes umfasst:
eine dritte Schicht (405), die ein Muschelkleberprotein umfasst, wobei die dritte Schicht auf der zweiten Schicht (404) angeordnet ist, und
eine vierte Schicht (406), die eine zweite Mehrzahl von Teilchen umfasst, die an dem Muschelkleberprotein der dritten Schicht angebracht sind.

5. Vorrichtung (410; 411; 412) nach Anspruch 4, wobei die dritte Schicht (405) so angeordnet ist, dass sie die zweite Schicht (404) in einer solchen Weise teilweise bedeckt, dass Teilchen der ersten Mehrzahl von Teilchen und Teilchen der zweiten Mehrzahl von Teilchen frei liegen.

6. Vorrichtung (410; 411; 412) nach Anspruch 4 oder 5, wobei die erste Mehrzahl von Teilchen (404) Teilchen umfasst, die sich von Teilchen unterscheiden, die in der zweiten Mehrzahl von Teilchen (406) enthalten sind.

7. Vorrichtung (410; 411; 412) nach einem der Ansprüche 4 bis 6, wobei die zweite Schicht eine erste Dichte von Teilchen hat und die vierte Schicht eine zweite Dichte von Teilchen hat, und wobei sich die erste Dichte von der zweiten Dichte unterscheidet.

8. Vorrichtung (410; 411; 412) nach einem der Ansprüche 4 bis 7, wobei mindestens eine der ersten (404) und der zweiten (406) Mehrzahl von Teilchen eine funktionale Gruppe umfasst.

9. Vorrichtung (410; 411; 412) nach einem der Ansprüche 4 bis 7, wobei die erste (404) und die zweite (406) Mehrzahl von Teilchen Teilchen mit einer Teilchengröße im Bereich von 5 nm bis 35 µm umfassen.

10. Vorrichtung (410; 411; 412) nach einem der Ansprüche 4 bis 9, wobei die erste (404) und/oder die zweite (406) Mehrzahl von Teilchen molekular eingeprägte Polymere mit einer Teilchengröße im Bereich von 5 µm bis 35 µm sind.

11. Vorrichtung (410; 411; 412) nach einem der Ansprüche 4 bis 9, wobei mindestens eine der ersten (404) und der zweiten (406) Mehrzahl von Teilchen Teilchen umfasst, die jeweils eine metallische Oberfläche wie zum Beispiel eine Goldoberfläche oder eine Silberoberfläche oder eine Platinoberfläche aufweisen.

12. Vorrichtung (410; 411; 412) nach Anspruch 11, wobei die metallische Oberfläche funktionalisiert ist.

13. Vorrichtung (410; 411; 412) nach einem der Ansprüche 4 bis 9, wobei die erste (404) und/oder die zweiten (406) Mehrzahl von Teilchen Polymer-Nanoteilchen mit einer Teilchengröße im Bereich von 150 bis 500 nm sind.

14. Fluidische Vorrichtung (500), die Folgendes umfasst:
eine Vorrichtung (200), die einen fluidischen Kanal (210) umfasst;
einen Einlass (502) und einen Auslass (503) zum Ermöglichen des Fließens einer Flüssigkeit durch den fluidischen Kanal; und
mindestens ein Sensorelement (504), das in dem fluidischen Kanal angeordnet ist, zum Detektieren und/oder Interagieren mit einer Komponente in der fließenden Flüssigkeit, wobei das Sensorelement (504) eine Vorrichtung (410; 411; 412) nach einen der Ansprüche 4 bis 13 umfasst.

## Revendications

1. Procédé de modification des propriétés d'une surface (402), comprenant les étapes de :
le revêtement (302) de ladite surface avec une protéine adhésive de moule (403 ; 405) de sorte qu'une première couche (403) comprenant ladite protéine adhésive de moule soit réalisée sur ladite surface, et
la fourniture (303) d'une deuxième couche (404) comprenant une première pluralité de particules sur au moins une portion de ladite première couche (403) comprenant ladite protéine adhésive de moule, dans lequel ladite deuxième couche est une monocouche.

2. Procédé selon la revendication 1, comprenant en outre les étapes de :
le revêtement (304) de ladite deuxième couche (404) comprenant ladite première pluralité de particules avec une protéine adhésive de moule de sorte qu'une troisième couche (405) comprenant ladite protéine adhésive de moule soit réalisée sur ladite deuxième couche ; et
la fourniture (305) d'une quatrième couche (406) comprenant une deuxième pluralité de particules sur ladite troisième couche comprenant ladite protéine adhésive de moule.

3. Dispositif (410 ; 411 ; 412) comprenant :
un substrat (401) ayant une première surface (402) ;
une première couche (403) comprenant ladite protéine adhésive de moule, ladite première couche étant agencée sur ladite première surface, et
une deuxième couche (404) comprenant une première pluralité de particules attachées à au moins une portion de ladite protéine adhésive de moule de ladite première couche, dans lequel ladite deuxième couche est une monocouche.

4. Dispositif (410 ; 411 ; 412) selon la revendication 3, comprenant en outre :
une troisième couche (405) comprenant une protéine adhésive de moule, ladite troisième couche étant agencée sur ladite deuxième couche (404), et
une quatrième couche (406) comprenant une deuxième pluralité de particules attachées à ladite protéine adhésive de moule de ladite troisième couche.

5. Dispositif (410 ; 411 ; 412) selon la revendication 4, dans lequel ladite troisième couche (405) est agencée pour recouvrir partiellement ladite deuxième couche (404), de telle manière que des particules de la première pluralité de particules et des particules de la deuxième pluralité de particules soient exposées.

6. Dispositif (410 ; 411 ; 412) selon la revendication 4 ou 5, dans lequel ladite première pluralité de particules (404) comprend des particules qui sont différentes des particules comprises dans ladite deuxième pluralité de particules (406).

7. Dispositif (410 ; 411 ; 412) selon l'une quelconque des revendications 4 à 6, dans lequel ladite deuxième couche a une première densité de particules et ladite quatrième couche a une deuxième densité de particules, et dans lequel ladite première densité est différente de ladite deuxième densité.

8. Dispositif (410 ; 411 ; 412) selon l'une quelconque des revendications 4 à 7, dans lequel au moins l'une de ladite première pluralité de particules (404) et de ladite deuxième pluralité de particules (406) comprend un groupe fonctionnel.

9. Dispositif (410 ; 411 ; 412) selon l'une quelconque des revendications 4 à 7, dans lequel ladite première pluralité de particules (404) et ladite deuxième pluralité de particules (406) comprennent des particules ayant une taille de particules dans la plage de 5 nm à 35 µm.

10. Dispositif (410 ; 411 ; 412) selon l'une quelconque des revendications 4 à 9, dans lequel ladite première pluralité de particules (404) et/ou ladite deuxième pluralité de particules (406) sont des polymères moléculairement imprimés ayant une taille de particules dans la plage de 5 µm à 35 µm.

11. Dispositif (410 ; 411 ; 412) selon l'une quelconque des revendications 4 à 9, dans lequel au moins l'un de ladite première pluralité de particules (404) et ladite deuxième pluralité de particules (406) comprend des particules ayant chacune une surface métallique comme une surface d'or ou une surface d'argent ou une surface de platine.

12. Dispositif (410 ; 411 ; 412) selon la revendication 11, dans lequel ladite surface métallique est fonctionnalisée.

13. Dispositif (410 ; 411 ; 412) selon l'une quelconque des revendications 4 à 9, dans lequel ladite première pluralité de particules (404) et/ou ladite deuxième pluralité de particules (406) sont des nanoparticules de polymère ayant une taille de particule dans la plage de 150 à 500 nm.

14. Dispositif fluidique (500) comprenant :
un dispositif (200) comprenant un canal fluidique (210) ;
une entrée (502) et une sortie (503) pour permettre un écoulement d'un liquide à travers ledit canal fluidique ; et
au moins un organe capteur (504) agencé dans ledit canal fluidique pour détecter et/ou interagir avec un composant dans le liquide s'écoulant, dans lequel ledit organe capteur (504) comprend un dispositif (410 ; 411 ; 412) selon l'une quelconque des revendications 4 à 13.
